(19) Europäisches Patentamt
European Patent Office
Office européen des brevets

(11) **EP 2 014 824 B1**

(12) **EUROPEAN PATENT SPECIFICATION**

(45) Date of publication and mention
of the grant of the patent:
**29.01.2014 Bulletin 2014/05**

(21) Application number: **07742672.4**

(22) Date of filing: **27.04.2007**

(51) Int Cl.:
*D06M 15/507* (2006.01)    *D01D 11/06* (2006.01)
*C03C 25/10* (2006.01)    *C03C 25/18* (2006.01)
*C03C 25/30* (2006.01)    *C03C 25/32* (2006.01)
*B29C 70/52* (2006.01)    *B29B 15/12* (2006.01)
*D02G 3/40* (2006.01)    *D02G 3/44* (2006.01)
*B29C 47/02* (2006.01)    *B60C 9/00* (2006.01)
*B29C 47/00* (2006.01)    *D06M 15/693* (2006.01)

(86) International application number:
**PCT/JP2007/059237**

(87) International publication number:
**WO 2007/129624 (15.11.2007 Gazette 2007/46)**

(54) **REINFORCING CORD, METHOD FOR PRODUCING THE SAME, AND PRODUCT USING THE REINFORCING CORD**

**ARMIERUNGSKORD, SEINE HERSTELLUNG UND VERWENDUNG**

**CABLE DE RENFORT, SON PROCEDE DE PRODUCTION ET PRODUIT L'UTILISANT**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **01.05.2006 JP 2006127867**

(43) Date of publication of application:
**14.01.2009 Bulletin 2009/03**

(73) Proprietor: **Nippon Sheet Glass Company Limited Tokyo 108-6321 (JP)**

(72) Inventor: **IMANISHI, Hideki Tokyo 108-6321 (JP)**

(74) Representative: **Hart-Davis, Jason et al Cabinet Beau de Loménie 158, rue de l'Université 75340 Paris Cedex 07 (FR)**

(56) References cited:
WO-A1-2006/010479    JP-A- 04 067 004
JP-A- 05 193 053    JP-A- 10 321 051
JP-A- 63 270 828    JP-A- H08 336 879
JP-A- 2003 340 903    JP-A- 2003 517 105
JP-A- 2006 009 180    JP-A- 2006 111 999
JP-A- 2006 307 361    US-A- 3 042 570
US-A- 3 660 974    US-A- 4 169 186

**Description**

Technical Field

The present invention relates to a reinforcing cord, a method for producing it, and products reinforced by the reinforcing cord, and particularly to a reinforcing cord for rubbers, a method for producing such reinforcing cords, and rubber products reinforced by the reinforcing cords.

Background Art

To improve the strength or durability of products such as toothed rubber belts, reinforcing fibers such as glass fiber or chemical fiber are commonly embedded in the matrix. However, after long use, the strength of the products often drops as a result of the fatigue that accumulates in the reinforcing fibers by bending. It is also known that the deterioration in the strength of the products accelerates when there is entry of water or oil in the products, causing the coating layer of the reinforcing fibers to swell and unwinding the twist in the fiber bundle.

Under these circumstances, various designs have been made for the reinforcing fibers, in order to improve bending resistance of the products, and reduce the change in property of the products in response to entry of water or oil. For example, JP2003-253568A and JP2003-268678A disclose techniques to reduce the change in property of the reinforcing cord against entry of water or oil, by impregnating glass fibers with a latex treatment agent that undergoes a little characteristic change against water or oil.

JP11(1999)-217739A disclose a technique in which bundles of several glass fibers are dried and twisted after impregnating the fibers with a latex, and an aqueous, fiber treatment agent containing a latex is coated thereon to form a coating layer as required, so as to improve both bending resistance, and water and oil resistance.

However, the coating layer formed by immersing the fibers in a treatment agent or coating the fibers with a treatment agent is susceptible to pore formation attributed to the producing method. This makes it difficult to completely prevent entry of water or oil. Accordingly, there is difficulty improving the durability of the products, such as toothed belts, with the use of the reinforcing cords formed by the foregoing methods.

Further, when a rubber belt reinforced by the reinforcing cords produced by the foregoing methods is bent hard, there are cases where the bending stress acting on the reinforcing cords unwinds the twist in the reinforcing fibers, lowering the breaking strength of the belt.

Further, when the rubber belt reinforced by the reinforcing cords is used for extended time periods under high temperature conditions, there are cases where the coating layer, formed by drying and curing the latex, gradually hardens and becomes less resistant to bending.

In view of these problems, JP11(1999)-13836A, JP2004-17378A, and JP2004-316049A, for example, disclose techniques to form a rubber layer covering the reinforcing fiber, by extruding a rubber material with an extruder to adhere it on a surface of the reinforcing fiber. Since the rubber layer formed by such method does not easily form pores, the strength is not deteriorated by the water or oil entering the reinforcing cord through the pores of the rubber layer.

However, forming a rubber layer (coating layer) on the surface of the reinforcing fiber by the extrusion of a material is problematic in that the coating layer does not have sufficient heat resistance or creep resistance (shape stability), damaging the coating layer and causing entry of water or oil into the cord after long use. Another problem of forming a coating layer (rubber layer) by the foregoing method is the difficulty forming a uniform, thin layer, increasing the external size of the reinforcing cord.

Disclosure of the Invention

The present invention was made in view of the foregoing problems, and it is an object of the invention to provide a reinforcing cord having desirable water and oil resistance realized by suppressing entry of water or oil into the reinforcing cord, and desirable bending resistance realized by preventing the bend-incurred unwinding of the twist in the fibers. The invention also provides a method for producing such reinforcing cords, and products using such reinforcing cords as a reinforcing member.

A producing method of a reinforcing cord of the present invention is a method for producing a reinforcing cord including a bundle of reinforcing fibers and a coating layer formed on a surface of the reinforcing fiber bundle, the method including extruding a material containing at least one selected from a polyester thermoplastic elastomer and a fluororesin thermoplastic elastomer to cause the extruded material to adhere to the surface of the reinforcing fiber bundle and form the coating layer. In the descriptions below, the process of forming the coating layer, in which the material is extruded to adhere to a surface of the reinforcing fiber bundle may be referred to as extrusion molding.

A reinforcing cord of the present invention is produced by a producing method of the present invention.

A product of the present invention includes a reinforcing cord of the present invention as a reinforcing member.

A reinforcing cord of the present invention, and a reinforcing cord obtained by a producing method of the present invention (hereinafter, also referred to as a reinforcing cord obtained by the present invention) include a coating layer, formed by extrusion molding, containing at least one selected from a polyester thermoplastic elastomer and a fluororesin thermoplastic elastomer. With such a coating layer, deformation or damage is unlikely to occur in the coating layer even after long use, and entry of water or oil through pores or cracks can be prevented to realize desirable water resistance and oil resistance. Accordingly, a product of the present invention, using the reinforcing cord, can have significantly improved water resistance and oil resistance.

In a reinforcing cord obtained by the present invention, a thermoplastic elastomer is used for the extrusion molding of the coating layer. This forms a film having a thinner, and more uniform thickness than films using rubber. Another advantage of the invention, then, is that it can provide a thin reinforcing cord. With current techniques, it is difficult to form a film having a thin and uniform thickness by the extrusion molding of a rubber material. Generally, the practical thickness of a film using a rubber material is about 0.3 mm at best. By contrast, the thickness can be reduced to about 0.1 mm when the thermoplastic elastomer is used.

Further, in a reinforcing cord obtained by the present invention, the reinforcing fiber bundle in the cord remains strongly bonded together by the coating layer formed by extrusion molding, even after long use. Thus, the reinforcing fiber bundle does not easily unwind even under severe bending conditions, and exhibits desirable bending resistance. Accordingly, a product of the present invention, using the reinforcing cord, can have significantly improved bending resistance.

Further, a reinforcing cord obtained by the present invention, with the sufficient oil resistance and water resistance, does not require forming a primary coating layer using a material that excels in oil resistance and water resistance. This allows for use of an inexpensive material (for example, a latex or water-soluble resin) for the primary coating layer when it is formed under the coating layer, making it possible to reduce the manufacturing cost of the reinforcing cord.

As described, a reinforcing cord obtained by the present invention excels in bending resistance, water resistance, and oil resistance. Accordingly, a product of the present invention, using the reinforcing cord as a reinforcing member, can have improved durability.

Brief Description of Drawings

FIG. 1 is a schematic diagram showing a structure of an example of an extruder used to form a coating layer of a reinforcing cord of the present invention.
FIG. 2 is a schematic cross sectional view depicting an example of a crosshead portion of the extruder shown in FIG. 1.
FIG. 3 is a scanning electron micrograph, substituted for drawing, showing a surface of a coating layer of a reinforcing cord according to an example of the present invention.
FIG. 4A is a schematic cross sectional view showing an example of a structure of a reinforcing cord of the present invention.
FIG. 4B is a schematic cross sectional view showing a structure of a flat belt as an example of a product reinforced by a reinforcing cord of the present invention.
FIG. 5 is a schematic view depicting a bending tester.

Best Mode for Carrying Out the Invention

The following will describe an embodiment of the present invention.

A method for producing a reinforcing cord of an embodiment of the present invention includes forming a coating layer, containing at least one selected from a polyester thermoplastic elastomer and a fluororesin thermoplastic elastomer, on a surface of a reinforcing fiber bundle by extrusion molding.

The method for producing a reinforcing cord of the present embodiment may further include twisting reinforcing fibers to form the reinforcing fiber bundle, before forming the coating layer.

The method for producing a reinforcing cord of the present embodiment may further include forming a primary coating layer on a surface of the reinforcing fiber, before forming the coating layer. In this case, the method may further include twisting the reinforcing fibers with the primary coating layer to form the reinforcing fiber bundle, after forming the primary coating layer on the reinforcing fibers and before forming the coating layer. When forming the primary coating layer, the primary coating layer can be formed by using a fiber treatment agent containing a rubber latex. The rubber latex may be at least one selected from, for example, a vinylpyridine-styrene-butadiene terpolymer latex, a butadiene latex, a butadiene-styrene copolymer latex, a dicarboxylated butadiene-styrene copolymer latex, an ethylene propylene latex, a chlorosulfonated polyethylene latex, a fluororubber latex, an acrylic rubber latex, and a hydrogenated nitrile rubber latex.

The method for producing a reinforcing cord of the present embodiment may further include forming an overcoat layer using a material containing rubber, the overcoat layer being formed on the coating layer after forming the coating layer. In this case, the rubber may be, for example, a rubber containing chlorosulfonated polyethylene as a main component. As used herein, the "rubber containing chlorosulfonated polyethylene as a main component" means that the content of chlorosulfonated polyethylene is 50 mass% or greater with respect to the entire rubber component.

The following more specifically describes a method for producing a reinforcing cord of the present embodiment.

<Reinforcing Fibers and a Bundle of Reinforcing Fibers>

The reinforcing fiber used in a method for producing a reinforcing cord of the present embodiment is not limited to particular shapes or materials as long as it can reinforce the product.

Examples of the reinforcing fiber include: glass fibers; polyvinyl alcohol fibers represented by vinylon fibers; polyester fibers; polyamide fibers such as nylon and aramids (aromatic polyamides); polyarylate fibers; polyketone fibers; carbon fibers; and poly($p$-phenylene benzooxazole) (PBO). Among these examples, glass fibers, that excel in properties such as dimension stability, heat resistance, and tensile strength, are suitably used. For example, when forming a reinforcing cord used to reinforce a toothed belt requiring high durability, it is preferable to use a glass fiber having sufficient strength.

The type of glass in the glass fibers is not particularly limited. However, high-strength glass, that excels in tensile strength, is more preferable to common alkali-free glass.

The fiber configuration is not particularly limited. In the case of glass fibers for example, it is preferable that the filament, the smallest constituting unit of the fiber, have an average diameter of from 5 $\mu$m to 13 $\mu$m. For example, a number of such filaments, 50 to 2,000, are bound together with a binder, and one or more of the filament constructs are aligned to form the reinforcing fiber. A number of these reinforcing fibers are then aligned to form a bundle of reinforcing fibers. Thereafter, a coating layer is formed on a surface of the reinforcing fiber bundle by extrusion molding. A method of forming a coating layer will be described later.

For example, the bundle of reinforcing fibers may be formed by primarily twisting the reinforcing fibers, aligning these fibers, and final twisting the aligning fibers in the opposite twist direction with respect to the twist direction of the primary twist.

The method of forming the bundle of reinforcing fibers is not limited to the one described above, and it can be formed in various ways, for example, by not giving the final twist, giving the primary twist and the final twist in the same direction, using different fiber materials for the central portion and the outer portion of the reinforcing fiber bundle, or giving the primary twist and the final twist in opposite directions. The bundle of reinforcing fibers so twisted is suitable for products requiring bending resistance, such as the reinforcing cord for toothed belts.

As described, the reinforcing fiber bundle of the present embodiment is formed by binding a plurality of reinforcing fibers. The reinforcing fibers may be surface-coated with a primary coating layer before they are used to form the bundle of reinforcing fibers. Details of the primary coating layer will be described later.

<Formation of Coating Layer by Extrusion Molding>

The reinforcing cord of the present embodiment includes a coating layer formed by extrusion molding. Preferably, the coating layer should be flexible (elastic) to improve bending resistance. As such, materials that exhibit flexible, elastomeric properties at ordinary temperature are preferably used. As used herein, the "flexible, elastomeric properties" means having a Shore A hardness (JIS K6253) of 100 or less, or a Shore D hardness (JIS K6253) of 80 or less, for example.

The coating layer of the present embodiment is formed of a material containing at least one selected from a polyester thermoplastic elastomer and a fluororesin thermoplastic elastomer, because these materials are resistant to deformation or damage that might occur during long use, and excel in moldability and ease of thickness control, among others reasons. The material used to form the coating layer contains at least one selected from a polyester thermoplastic elastomer and a fluororesin thermoplastic elastomer in the amount of preferably 20 mass% or greater, and more preferably 50 mass% or greater, or the content may be even 100 mass%, by solely containing at least one of a polyester thermoplastic elastomer and a fluororesin thermoplastic elastomer. The polyester thermoplastic elastomer and the fluororesin thermoplastic elastomer preferably should be selected such that the material does not dissolve or foam in the temperature range of the step in which the overcoat layer is formed after forming the coating layer, or the step in which the reinforcing cord is embedded in the matrix. Further, since the coating layer needs to have adhesion to the matrix and the overcoat layer, it is preferable that the material used for the coating layer be compatible with properties to the matrix and the overcoat layer. Preferably, the coating layer is made of a material containing a polyester thermoplastic elastomer, because such material has superior properties, including bondability to the materials commonly used for the matrix and the overcoat layer. Preferably, the material contains a polyester thermoplastic elastomer in the amount of, for example, 50 mass% or greater.

Examples of the polyester thermoplastic elastomer include Hytrel (Du Pont-Toray Co., Ltd.), Pelprene (Toyobo), Glylux (Dainihon Ink Co., Ltd.), and Nouvelan (Teijin Limited). Examples of the fluororesin thermoplastic elastomer include DAI-EL Thermoplastic (Daikin Industries, Ltd.) and THV (Sumitomo 3M Limited).

The material used to form the coating layer may additionally contain a short glass fiber, carbon black, silica, or various kinds of organic fibers, in order to alter moldability, molding conditions, or properties after molding.

The coating layer, formed by extrusion molding using a material containing at least one selected from a polyester thermoplastic elastomer and a fluororesin thermoplastic elastomer is materially denser (less susceptible to pore formation) than traditional coating layers formed by impregnating a latex. Thus, the reinforcing cord of the present embodiment can prevent entry of foreign substances, such as water or oil, into the material. Further, since the coating layer of the present embodiment is materially strong and integrally formed by extrusion molding, it has strong cohesion to the material confined therein. The coating layer therefore excels in the ability to retain the structure of the reinforcing fiber bundle it confines, particularly in a reinforcing cord in which the reinforcing fibers are twisted.

Further, by selecting a material containing at least one selected from a polyester thermoplastic elastomer and a fluororesin thermoplastic elastomer, the coating layer can have excellent heat resistance and creep resistance (shape stability), making it possible to fabricate a reinforcing cord that can withstand long use.

The thickness of the coating layer is not particularly limited, and it can be set within a range of, for example, from 0.05 mm to 5.0 mm. When a thin cord is needed, a 0.05 to 1.0 mm range is preferable to reduce the overall diameter of the cord.

In the following, description is made as to extrusion molding.

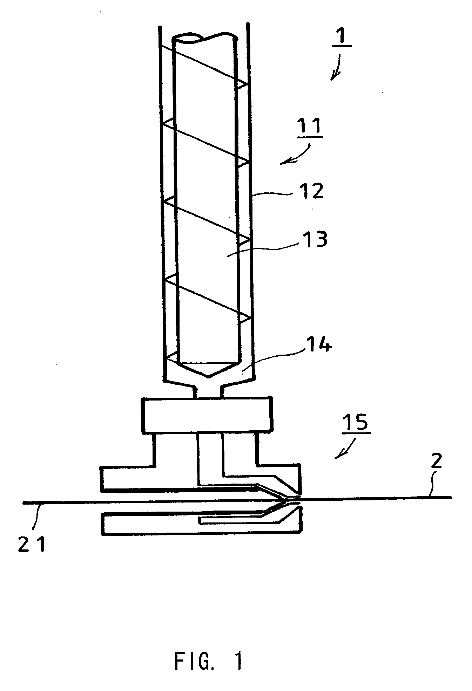

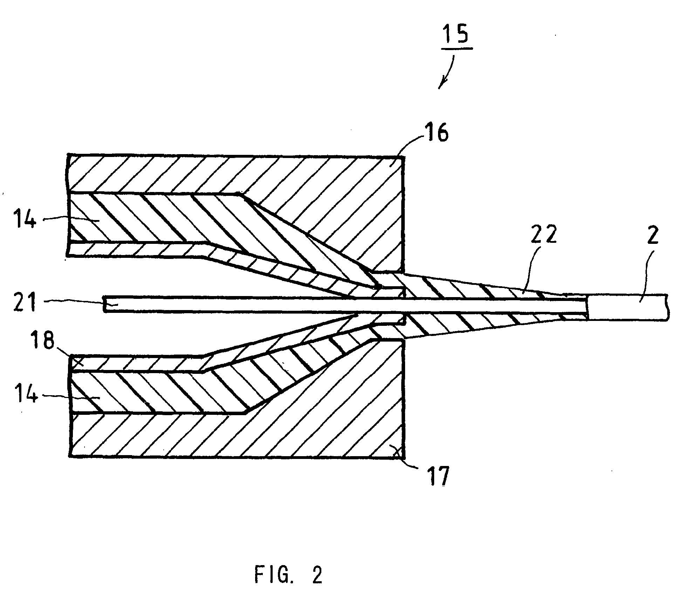

In the present embodiment, the coating layer is formed by extruding the material of the coating layer with an extruder to continuously adhere the coating layer material to a surface of the reinforcing fiber bundle moved relative to the extruder. Specifically, the coating layer is formed with an extruder shown in FIG. 1 and FIG. 2, for example.

FIG. 1 shows a schematic illustration of an exemplary structure of an extruder used to form the coating layer. Hatching is omitted in FIG. 1. An extruder 1 includes an extruder body 11 and a crosshead portion 15. The extruder body 11 includes a cylinder 12, a screw 13, and other components, including a heater (not shown). A material 14 for forming the coating layer is supplied into the cylinder 12 through a hopper (not shown), and, after heat-melted by the heater, sent to the crosshead portion 15 by the rotation of the screw 13. At the crosshead portion 15, the material 14 is extruded onto a surface of a reinforcing fiber bundle 21, which is transported by a transport mechanism (not shown) to move in one direction relative to the crosshead portion 15 of the extruder 1. This forms the coating layer and thus a reinforcing cord 2.

FIG. 2 shows an enlarged, cross sectional view of an example of the crosshead portion 15. In FIG. 2, the crosshead portion 15 includes dice 16 and 17, and a cored bar 18 having a land portion. The material 14, in a molten state, is sent from the extruder body into the space between the dice 16 and 17, and the cored bar 18. Here, the material 14 is extruded onto a surface of the reinforcing fiber bundle 21 to form a coating layer 22 and thus the reinforcing cord 2. The form of the dice, which is split in this example, is not limited. Further, the configuration of the extruder is not limited to the example shown in FIG. 1 and FIG. 2. The extruder can have any configuration as long as it includes a mechanism that allows the material to be extruded and adhered to a surface of the reinforcing fiber bundle.

<Primary Coating Layer>

In the reinforcing cord of the present embodiment, it is preferable that the reinforcing fiber be provided with a primary coating layer in advance, in order to further improve bending resistance and strength.

The primary coating layer can be formed by, for example, immersing the reinforcing fiber, such as the glass fiber described above, in a fiber treatment agent containing a rubber latex, followed by drying.

It is preferable to provide the primary coating layer for the reinforcing fiber when the reinforced product requires strength or bending resistance in particular. By providing the primary coating layer, the reinforcing fibers will not be in direct contact with one another, making it possible to prevent damage to the reinforcing fibers and improve the strength and bending resistance of the reinforcing cord.

The primary coating layer can be formed by coating the reinforcing fiber with an aqueous, fiber treatment agent (hereinafter, also referred to as an "aqueous treatment agent") containing a rubber latex, followed by drying and curing. The following more specifically describes the primary coating layer.

The primary coating layer of the present embodiment can be formed with an aqueous treatment agent primarily containing a rubber latex. The rubber latex may be at least one selected from, for example, a vinylpyridine-styrene-butadiene terpolymer latex, a butadiene latex, a butadiene-styrene copolymer latex, a dicarboxylated butadiene-styrene copolymer latex, an ethylene propylene latex, a chlorosulfonated polyethylene latex, a fluororubber latex, an acrylic rubber latex, and a hydrogenated nitrile rubber latex. That is, the rubber latex contained in the aqueous treatment agent may be either one of, or more than one of these materials. As used herein, "primarily containing a rubber latex" means that the content of the rubber latex in the fiber treatment agent is 20 mass% or greater.

The aqueous treatment agent may also contain an emulsion or water dispersion of polyurethane resin, epoxy resin, acrylic resin, phenol resin, melamine resin, or low-molecular polyolefin resin.

Further, the aqueous treatment agent may contain a resorcin-formaldehyde condensate, in order to improve the adhesion between the reinforcing fiber and the latex. In the present embodiment, the aqueous treatment agent is not necessarily required to include a resorcin-formaldehyde condensate. This is because, in the reinforcing cord of the present embodiment, the structure of the reinforcing fibers is maintained by the coating layer formed by extrusion molding. That is, the reinforcing cord of the present embodiment can be formed without using formaldehyde, making the product more environmentally friendly.

Further, the aqueous treatment agent may contain carbon black. Being an inexpensive inorganic filler, the carbon black can reduce the manufacturing cost of the reinforcing cord.

The aqueous treatment agent also may appropriately contain other components, such as inorganic fillers other than carbon black, plasticizers, antioxidants, metal oxides, crosslinkers, and crosslinking coagents. As the inorganic filler, silica particles may be used.

The aqueous treatment agent may contain both the resorcin-formaldehyde condensate and carbon black.

Preferably, the aqueous treatment agent is in the form of a dispersion of the constituting components of the primary coating layer in an aqueous solvent. The aqueous solvent is easy to handle and makes it easier to control the concentration of the constituting components. Further, the aqueous solvent is much more environmentally friendly than organic solvents.

As to the contents of the constituting components of the primary coating layer in the aqueous treatment agent, the content of the resorcin-formaldehyde condensate is preferably 0 to 100 with respect to the mass, 100, of the rubber latex, in terms of a mass ratio of solid contents. When the content of the resorcin-formaldehyde condensate in the aqueous, fiber treatment agent is too high, the relatively smaller fraction of the rubber latex makes the primary coating layer too hard, with the result that the bending resistance of the product decreases. It is therefore preferable that the content of the resorcin-formaldehyde condensate be in a range of from 5 to 30.

The method of coating the reinforcing fiber with the aqueous treatment agent to form the primary coating layer is not particularly limited. Generally, the primary coating layer can be formed by immersing the reinforcing fiber in a water tank containing the aqueous treatment agent, and then removing water in a drying furnace after taking the reinforcing fiber from the tank. The drying conditions for water removal are not particularly limited. For example, water can be removed by exposure to an 80°C to 320°C atmosphere for 0.1 to 2 minutes.

The following describes the adhesion rate of the primary coating layer. The adhesion rate R of the primary coating layer is the mass percentage of the primary coating layer that remains adhered to the reinforcing fiber, such as the glass fiber, in the reinforcing cord after drying. The adhesion rate R is given by the following equation.

$$R\ (\%) = \ ((C1\text{-}C0)/C1) \times 100,$$

where C0 is the dry mass of the reinforcing fiber before coating, and C1 is the dry mass of the reinforcing fiber after coating.

The adhesion rate of the primary coating layer is preferably 10 to 30 mass%, and more preferably 12 to 25 mass%. When the adhesion rate is less than 10 mass%, it becomes difficult to cover the entire surface of the reinforcing fiber bundle with the primary coating layer.

When the adhesion rate exceeds 30 mass%, dripping of the aqueous treatment agent becomes likely in forming the primary coating layer. Further, because the primary coating layer becomes too thick in this case, the characteristics of the reinforcing cord may be varied in portions closer to the center of the cord and in portions at the periphery, among others.

<Overcoat Layer>

In the reinforcing cord of the present embodiment, an overcoat layer may be provided on the coating layer, in order to further improve the adhesion with the matrix. The treatment agent used to form the overcoat layer may include, for example, rubber, a crosslinker, carbon black, a solvent, and an adhesive. As the rubber included in the treatment agent, those containing chlorosulfonated polyethylene as a main component preferably can be used, for example. The thickness of the overcoat layer is not particularly limited, and it can be set within a range of from 5 $\mu$m to 100 $\mu$m, for example.

The overcoat layer of the present embodiment can be formed by common, known methods. For example, the overcoat layer can be formed by applying the treatment agent on a surface of the reinforcing cord provided with the coating layer, followed by drying. The cycle of application and drying may be repeated to form an overcoat layer covering the entire surface of the reinforcing cord. As noted above, the overcoat layer effectively improves the adhesion between the reinforcing cord and the matrix.

<Products Reinforced by the Reinforcing Cord>

The reinforcing cord of the present embodiment obtained in the manner described above can be embedded in the matrix to produce a product reinforced by the reinforcing cord. For example, the reinforcing cord can be embedded in a rubber matrix to produce a rubber product reinforced by the reinforcing cord. The means to embed and provide the reinforcing cord of the present embodiment in the matrix of the product such as a belt is not particularly limited. When used as a reinforcing member for toothed belts, the reinforcing cord can be embedded in the matrix by a means commonly used in manufacture of toothed belts for automobiles or printers. With the reinforcing cord of the present embodiment embedded in the product, the durability of the product can be improved.

When the reinforced product is a belt for example, the matrix of the belt preferably may be a rubber whose main components are hydrogenated nitrile rubber and hydrogenated nitrile rubber containing small amounts of zinc methacrylate dispersed therein, a rubber whose main components are chloroprene rubber or ethylenepropylene rubber, or a polymer material such as polyurethane, for example.

When the matrix of the belt is the polyester thermoplastic elastomer or the fluororesin thermoplastic elastomer used to form the coating layer, the adhesion between the reinforcing cord and the matrix will be sufficient even when the reinforcing cord is not provided with the overcoat layer.

Examples

The following will describe the present invention in more detail based on examples and comparative examples.

Example 1

In Example 1, three glass fibers (each being a bundle of 200 filaments having an average diameter of 9 $\mu$m, E-glass composition) were aligned with one another. The glass fibers were immersed in a water tank containing an aqueous treatment agent shown in Table 1. Out of the water tank, the glass fibers were dried for one minute in a drying furnace that had been set to 150°C. As a result, reinforcing fibers with a primary coating layer were obtained.

[Table 1]

| Composition of aqueous treatment agent | Content |
|---|---|
| H-NBR (solid mass percentage 40%)[*1] | 100 parts by mass |
| Resorcin-formaldehyde condensate | 10 parts by mass |
| [*1] Hydrogenated nitrile rubber latex (Zetpol Latex, Zeon) | |

The glass fibers were primarily twisted at a rate of 8 times/10 cm, and eleven such primary helices were aligned and finally twisted at a rate of 8 times/10 cm to obtain a reinforcing fiber bundle. The adhesion rate of the primary coating layer with respect to the mass of the reinforcing fiber bundle was 20 mass%.

Then, a coating layer, about 0.1 mm thick, was formed on a surface of the reinforcing fiber bundle with an extruder shown in FIG. 1, using the polyester thermoplastic elastomer Hytrel® 7277 (Du Pont-Toray Co., Ltd.). The coating layer was formed at a temperature of 220°C.

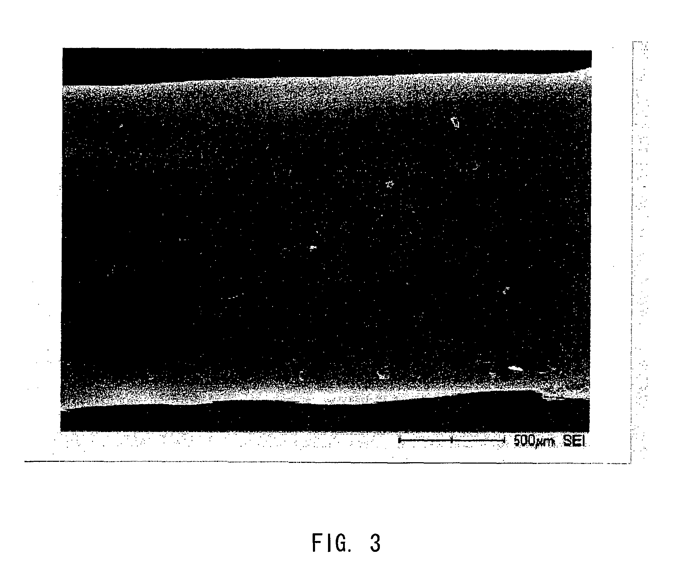

FIG. 3 shows the surface of the reinforcing cord of this example provided with the coating layer formed by extrusion molding, as observed with a scanning electron microscope (SEM; JSM-T330A; JEOL Ltd.). Observation was made under an applied voltage of 20 kV. As clearly shown in FIG. 3, the surface of the coating layer, formed by the characteristic extrusion molding of the present invention, was very smooth and did not have any pores that would permit entry of water or oil. As noted above, the thickness of the coating layer was about 0.1 mm, and the outer diameter of the cord was 1.4 mm, as opposed to 1.2 mm before coating.

An overcoat layer was formed on the reinforcing cord. The overcoat layer was formed by applying a mixture of chlorosulfonated polyethylene, isocyanate, carbon black, P-nitrosobenzene, xylene, and toluene, followed by drying. In this example, the cycle of application and drying was repeated twice to form the overcoat layer.

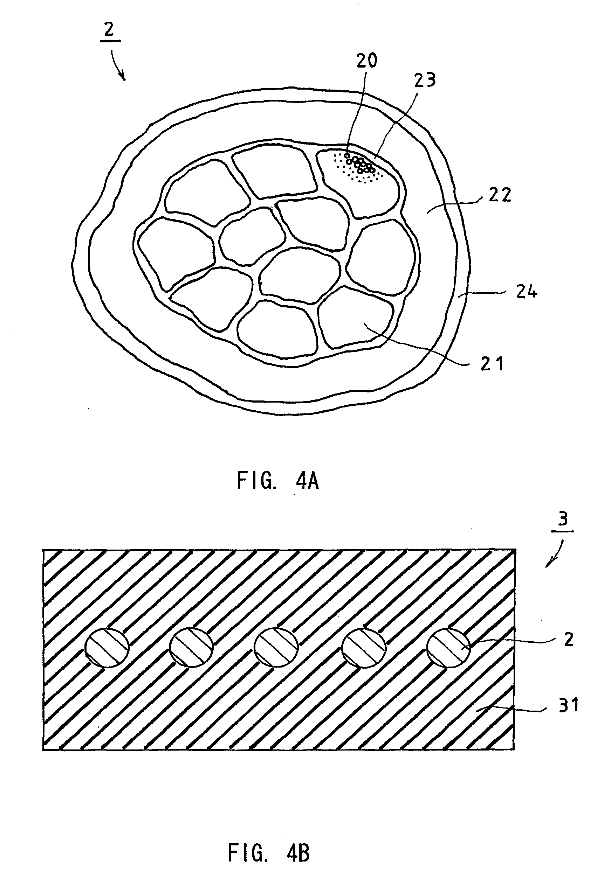

FIG. 4A shows a schematic cross section of the reinforcing cord of this example formed as above. The reinforcing cord 2 of this example has a primary coating layer 23 on the surfaces of the glass fibers 20 each made up of a bundle of filaments. The glass fibers 20 are twisted to form a reinforcing fiber bundle 21, and a coating layer 22 is formed on the surface of the reinforcing fiber bundle 21. An overcoat layer 24 is formed on the surface of the coating layer 22 to form the reinforcing cord 2 of this example. In FIG. 4A, hatching is omitted for clarity of the visible outline.

The reinforcing cord of this example was used to make a flat belt. According to the procedure of press molding, the reinforcing cords of this example were embedded in the matrix of the composition shown in Table 2 to form a flat belt having a width of 19 mm and a thickness of 5 mm. The length of the belt portion was 300 mm.

FIG. 4B shows a schematic cross section of a flat belt 3 formed in this example. The flat belt 3 includes the reinforcing cords 2 embedded in the matrix, a rubber 31.

[Table 2]

| Composition of matrix | Content |
| --- | --- |
| H-NBR[*2] | 70 parts by mass |
| H-NBR/ZDMA[*3] | 30 parts by mass |
| ZnO | 10 parts by mass |
| Stearic acid | 1 part by mass |
| Carbon black | 30 parts by mass |
| Trioctyltrimellitate | 5 parts by mass |
| Sulfur | 0.1 parts by mass |
| 1,3-bis(*t*-butylperoxyisopropyl)benzene | 6 parts by mass |
| [*2] water-soluble hydrogenated nitrile rubber (Zetpol 2020, Zeon) [*3] water-soluble hydrogenated nitrile rubber/zinc methacrylate (ZSC 2000L, Zeon) | |

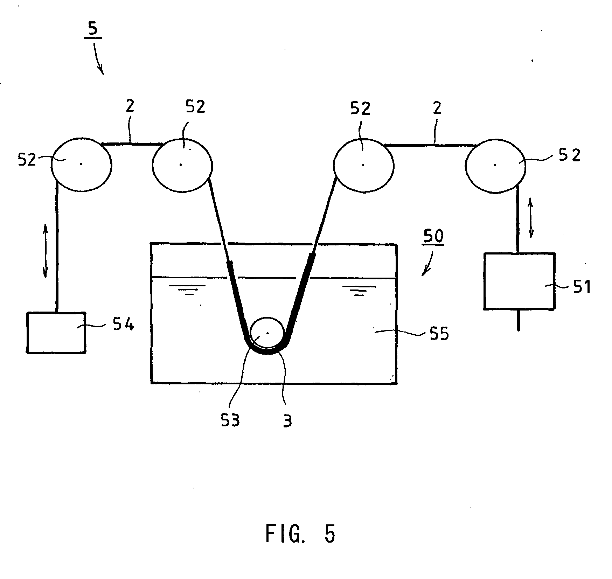

The product (flat belt) was tested to evaluate durability. Specifically, the flat belt was set in a bending tester 5 shown in FIG. 5, and an initial and a final tensile strength of the flat belt was measured. These tensile strength values were then used to determine a strength retention, according to the formula below. The strength retention was used as a measure of product durability. To measure the tensile strength, a 250 mm-long sample was chucked and pulled at 50 mm/min in the lengthwise direction, and the maximum stress value at the breaking point of the cord (sample) was recorded.

$$\text{Strength retention (\%)} = (\text{final tensile strength/initial tensile strength}) \times 100$$

Referring to FIG. 5, the bending tester 5 includes a heating bath 50 providing a test environment. One end of the reinforcing cord 2 is attached to a linear motor 51, and the rest is suspended by a series of pulleys 52. The flat belt 3 is bent by a roller 53, the periphery of which is kept in the heating bath 50. The other end of the reinforcing cord 2 is attached to a weight 54 by being suspended by the pulleys 52.

In this manner, the test piece was moved back and forth by the linear motor 51 to repeat a bending test for the flat belt 3 rolled around the roller 53. Note that the heating bath 50 can be charged with a liquid 55 (here, water or oil) to perform the bending test.

The bending test was performed under three environmental conditions: heat, water, and oil. The number of bend was 20,000 in each test.

- Heat test:

  The content of the heating bath 50: air; ambient temperature: 80°C

- Water test:

  The content of the heating bath 50: water; ordinary temperature

- Oil test
  The content of the heating bath 50: oil; temperature: 120°C

The test results are shown in Table 3 below.

Table 3 also shows the result of water absorbance measurement, which was performed by immersing the reinforcing cord of this example in a 96°C hot water for 24 hours. Table 3 also shows the result of oil absorbance measurement, which was performed by immersing the reinforcing cord of this example in a 120°C oil for 24 hours. Here, the water absorbance and oil absorbance are the percentage obtained by dividing a change in the weight of the reinforcing cord before and after the immersion by the weight of the reinforcing cord before immersion.

Example 2 (not according to present invention)

As the reinforcing cord of Example 2, the same reinforcing cord used in Example 1 was prepared according to the procedure of Example 1, except that the primary coating layer was omitted (the primary coating layer was not provided). As a product reinforced by the reinforcing cord of Example 2, a flat belt was prepared according to the procedure of Example 1.

The flat belt using the reinforcing cord of Example 2 was subjected to the bending test and immersion test as in Example 1. The results are shown in Table 3.

Comparative Examples 1 to 3

As the reinforcing cord of Comparative Example 1, the same reinforcing cord used in Example 1 was prepared according to the procedure of Example 1, except that the coating layer was omitted (the coating layer was not provided).

As the reinforcing cord of Comparative Example 2, the same reinforcing cord used in Example 1 was prepared according to the procedure of Example 1, except that the coating layer was prepared from the styrene thermoplastic elastomer TR1086 (JSR).

As the reinforcing cord of Comparative Example 3, the same reinforcing cord used in Example 1 was prepared according to the procedure of Example 1, except that the coating layer was prepared from the polyurethane elastomer Resamine P-2060 (Dainichiseika Color & Chemicals Mfg. Co., Ltd.).

According to the procedure of Example 1, flat belts were prepared as the products reinforced by the reinforcing cords of Comparative Examples 1 to 3. The flat belts using the reinforcing cords of Comparative Examples 1 and 2 were subjected to the bending test and immersion test as in Example 1. The results are shown in Table 3.

[Table 3]

| | | Example 1 | Example 2 * | Comparative Example 1 | Comparative Example 2 | Comparative Example 3 |
|---|---|---|---|---|---|---|
| Preparation conditions of reinforcing cord | Primary coating layer | H-NBR+RF[*4] | Not provided | H-NBR+RF[*4] | H-NBR+RF[*4] | H-NBR+RF[*4] |
| | Coating layer | Hytrel 7277 | Hytrel 7277 | Not provided | TR 1086 | P-2060 |
| | Overcoat layer | Provided | Provided | Provided | Provided | Provided |
| Strength retention of flat belt (%) | Heat test | 98 | 85 | 83 | 84 | 82 |
| | Water test | 96 | 65 | 60 | 85 | 70 |
| | Oil test | 90 | 60 | 46 | 52 | 46 |
| Water absorbance and oil absorbance of reinforcing cord (%) | Water immersion test | 3.9 | 3.9 | 12.7 | 3.9 | 4.1 |
| | Oil immersion test | 3.5 | 3.5 | 14.5 | 3.5 | 3.5 |
| [*4] Mixture of water-soluble hydrogenated nitrile rubber (H-NBR) and resorcin-formaldehyde (RF) condensate | | | | | | |
| * Example 2 is not according present invention | | | | | | |

It was found from the results shown in Table 3 that the coating layer formed by extrusion molding is highly effective in preventing entry of water or oil into the reinforcing cord. It was also found from the bending test for the flat belts that the strength retention can be greatly improved by the formation of the coating layer. By comparing the reinforcing cords of Example 1 and Comparative Examples 2 and 3, which differ only in the material of the coating layer, it was found that the strength retention in the bending test was higher in Example 1 using the polyester thermoplastic elastomer for the coating layer, compared with Comparative Example 2 using the styrene thermoplastic elastomer for the coating layer, and Comparative Example 3 using the polyurethane elastomer for the coating layer. It was therefore confirmed that the bending resistance can be improved by forming the coating layer with the polyester thermoplastic elastomer.

In Comparative Example 2, due to the poor creep resistance, the coating layer underwent severe deformation and pores were formed during the bending test of the flat belt. As a result, the cord lost cohesion and the tensile strength dropped. Entry of water or oil through the pores also occurred, impairing the characteristics of the reinforcing cord.

It was found from the result of Example 2 that the coating layer formed with the polyester thermoplastic elastomer can provide sufficient water resistance and oil resistance even when the primary coating layer is not provided. The strength was sufficient as well.

Examples 3 and 4, and Comparative Example 4 (Example 4 is not according to present invention)

As the reinforcing cords of Examples 3 and 4 and Comparative Example 4, the same reinforcing cords used in Examples 1 and 2 and Comparative Example 1 were used, respectively, except that the overcoat layer was omitted. In the reinforcing cord of Example 5, the fluororesin thermoplastic elastomer THVX815G (Sumitomo 3M Limited) was used for the coating layer. The water absorbance and oil absorbance of these reinforcing cords were measured as in Example 1. The results are shown in Table 4.

[Table 4]

|  |  | Example 3 | Example 4 * | Example 5 | Comparative Example 4 |
|---|---|---|---|---|---|
| Preparation conditions of reinforcing cord | Primary coating layer | H-NBR+RF[*5] | Not provided | H-NBR+RF[*5] | H-NBR+RF[*5] |
|  | Coating layer | Hytrel 7277 | Hytrel 7277 | THVX 815G | Not provided |
|  | Overcoat layer | Not provided | Not provided | Provided | Not provided |
| Water absorbance and oil absorbance of reinforcing cord (%) | Water immersion test | 5.0 | 4.8 | 4.7 | 32.3 |
|  | Oil immersion test | 3.1 | 3.2 | 3.0 | 29.3 |

[*5] Mixture of water-soluble hydrogenated nitrile rubber (H-NBR) and resorcin-formaldehyde (RF) condensate
* Example 4 is not according to present invention

It was found from the results shown in Table 4 that the water absorbance and oil absorbance of the samples using the fluororesin thermoplastic elastomer were comparable to those in the samples using the polyester thermoplastic elastomer.

From the results shown in Tables 3 and 4, it was found that the coating layer formed by extrusion molding using the polyester thermoplastic elastomer or the fluororesin thermoplastic elastomer is highly effective in preventing entry of water or oil into the reinforcing cord, irrespective of whether the overcoat layer is formed.

One of the characteristics of the polyester elastomer and the fluororesin elastomer is that they have a good balance of desirable properties such as heat resistance, cold resistance, and oil resistance. In particular, the polyester elastomer, with its excellent mechanical and bond properties, is suitable for rubber reinforcing cords. For comparison, a reinforcing cord was prepared that had the coating layer formed by extrusion molding of NBR (nitrile rubber). However, the thickness of the coating layer could not be reduced to more than 0.3 mm, and a coating layer with a thickness of 0.1 mm was unattainable. The outer diameter of the cord was 1.8 mm.

This result suggests that the use of a rubber material for the coating layer is not suited in applications such as the timing belt, in which more than one reinforcing cord is used for reinforcement, and in which strength is maintained at certain intervals.

Industrial Applicability

With a reinforcing cord of the present invention and a method of production thereof, a reinforcing cord can be provided that has desirable water resistance, oil resistance, and bending resistance. The invention therefore suitably can be used to reinforce products using rubber and polymer materials such as polyurethane as a matrix. The products reinforced by a reinforcing cord of the present invention can withstand a heavy load, and are therefore usable in applications, for example, such as toothed belts, requiring durability. Further, a reinforcing cord of the present invention can be used in place of an organic fiber rope or a steel wire to provide improved bending resistance and increase life.

## Claims

1.  A method for producing a reinforcing cord including a bundle of reinforcing fibers and a coating layer formed on a surface of the reinforcing fiber bundle,
    the method comprising:

    forming a primary coating layer on a surface of the reinforcing fibers; and
    extruding a material containing at least one selected from a polyester thermoplastic elastomer and a fluororesin thermoplastic elastomer to cause the extruded material to adhere to the surface of the reinforcing fiber bundle including the reinforcing fibers with the primary coating layer and form the coating layer,
    wherein the primary coating layer is formed using a fiber treatment agent containing a rubber latex, and
    wherein the rubber latex is at least one selected from a vinylpyridine-styrene-butadiene terpolymer latex, a butadiene latex, a butadiene-styrene copolymer latex, a dicarboxylated butadiene-styrene copolymer latex, an ethylene propylene latex, a chlorosulfonated polyethylene latex, a fluororubber latex, an acrylic rubber latex, and a hydrogenated nitrile rubber latex.

2.  The method according to claim 1, wherein the material contains the polyester thermoplastic elastomer.

3.  The method according to claim 2, wherein the material contains the polyester thermoplastic elastomer in an amount of 50 mass% or greater.

4.  The method according to claim 1, further comprising twisting the reinforcing fibers to form the reinforcing fiber bundle, before forming the coating layer.

5.  The method according to claim 1, further comprising twisting the reinforcing fibers with the primary coating layer to form the reinforcing fiber bundle, after forming the primer coating layer on the reinforcing fibers and before forming the coating layer.

6.  The method according to claim 1, further comprising forming an overcoat layer using a material containing rubber, the overcoat layer being formed on the coating layer after forming the coating layer.

7.  The method according to claim 6, wherein the rubber contains chlorosulfonated polyethylene as a main component.

8.  A reinforcing cord produced by the method of any one of claims 1 to 7.

9.  A product which contains the reinforcing cord of claim 8 as a reinforcing member.

10. The product according to claim 9, wherein the product is a toothed belt.

## Patentansprüche

1.  Verfahren zum Herstellen eines Armierungscords, der ein Bündel Verstärkungsfasern und eine auf einer Oberfläche des Verstärkungsfaserbündels ausgebildeten Beschichtungsschicht umfasst,
    wobei das Verfahren umfasst:

    Ausbilden einer primären Beschichtungsschicht auf einer Oberfläche der Verstärkungsfasern und
    Extrudieren eines Materials, das wenigstens eines enthält, das aus einem thermoplastischen Polyesterelastomer und einem thermoplastischen Fluorharzelastomer ausgewählt ist, um zu bewirken, dass das extrudierte Material an der Oberfläche des Verstärkungsfaserbündels, das die Verstärkungsfasern mit der primären Beschichtungsschicht umfasst, haftet und die Beschichtungsschicht ausbildet,
    wobei die primäre Beschichtungsschicht unter Verwendung eines Faserbehandlungsmittels, das einen Kautschuklatex enthält, ausgebildet ist, und
wobei der Kautschuklatex wenigstens einer ist, der aus einem Vinylpyridinstyrolbut-Terpolymerlatex, einem Butadienlatex, einem Butadienstryrol-Copolymerlatex, einem dicarboxylierten Butadienstyrol Copolymerlatex, einem Ethylenpropylenlatex, einem chlorsulfonierten Polyethylenlatex, einem Fluorkautschuklatex, einem Acrylkautschuklatex und einem hydrogenierten Nitrilkautschuklatex ausgewählt ist.

2. Verfahren nach Anspruch 1, wobei das Material den thermoplastischen Polyesterelastomer enthält.

3. Verfahren nach Anspruch 2, wobei das Material den thermoplastischen Polyesterelastomer in einem Gehalt von 50 Massenprozent oder höher enthält.

4. Verfahren nach Anspruch 1, ferner umfassend Verdrillen der Verstärkungsfasern, um das Verstärkungsfaserbündel auszubilden, bevor die Beschichtungsschicht ausgebildet wird.

5. Verfahren nach Anspruch 1, ferner umfassend Verdrillen der Verstärkungsfasern mit der primären Beschichtungsschicht, um das Verstärkungsfaserbündel auszubilden, nachdem die primäre Beschichtungsschicht auf den Verstärkungsfasern ausgebildet ist und bevor die Beschichtungsschicht ausgebildet wird.

6. Verfahren nach Anspruch 1, ferner umfassend Ausbilden einer Mantelschicht unter Verwendung eines kautschukhaltigen Materials, wobei die Mantelschicht auf der Beschichtungsschicht ausgebildet ist, nachdem die Beschichtungsschicht ausgebildet ist.

7. Verfahren nach Anspruch 6, wobei der Kautschuk als eine Hauptkomponente chlorsulfoniertes Polyethylen enthält.

8. Armierungscord, der durch das Verfahren nach einem der Ansprüche 1 bis 7 hergestellt ist.

9. Produkt, das den Armierungscord nach Anspruch 8 als ein Verstärkungselement enthält.

10. Produkt nach Anspruch 9, wobei das Produkt ein Zahnriemen ist.


**Revendications**

1. Procédé de production d'une corde de renforcement comprenant un faisceau de fibres de renforcement et une couche de revêtement formée sur une surface du faisceau de fibres de renforcement,
le procédé comprenant :

la formation d'une première couche de revêtement sur une surface des fibres de renforcement ; et
l'extrusion d'un matériau contenant au moins un choisi parmi un élastomère thermoplastique de polyester et un élastomère thermoplastique de fluororésine pour faire en sorte que le matériau extrudé adhère à la surface du faisceau de fibres de renforcement incluant les fibres de renforcement avec la première couche de revêtement et forme la couche de revêtement,
dans lequel la première couche de revêtement est formée en utilisant un agent de traitement de fibres contenant un latex de caoutchouc, et
dans lequel le latex de caoutchouc est au moins un choisi parmi un latex terpolymère de vinylpyridine-styrène-butadiène, un latex de butadiène, un latex copolymère de butadiène-styrène, un latex copolymère de butadiène-styrène dicarboxylé, un latex d'éthylène propylène, un latex de polyéthylène chlorosulfoné, un latex de fluoro-caoutchouc, un latex de caoutchouc acrylique, et un latex de caoutchouc de nitrile hydrogéné.

2. Procédé selon la revendication 1, dans lequel le matériau contient l'élastomère thermoplastique de polyester.

3. Procédé selon la revendication 2, dans lequel le matériau contient l'élastomère thermoplastique de polyester dans une quantité de 50 % en masse ou supérieure.

4. Procédé selon la revendication 1, comprenant de plus le tordage des fibres de renforcement pour former le faisceau de fibres de renforcement avant la formation de la couche de revêtement.

5. Procédé selon la revendication 1, comprenant de plus le tordage des fibres de renforcement avec la première couche de revêtement pour former le faisceau de fibres de renforcement, après la formation de la première couche de revêtement sur les fibres de renforcement et avant la formation de la couche de revêtement.

6. Procédé selon la revendication 1, comprenant de plus la formation d'une couche de couverture en utilisant un matériau contenant du caoutchouc, la couche de couverture étant formée sur la couche de revêtement après la formation de la couche de revêtement.

7. Procédé selon la revendication 6, dans lequel le caoutchouc contient du polyéthylène chlorosulfoné comme constituant principal.

8. Corde de renforcement produite par le procédé selon l'une quelconque des revendications 1 à 7.

9. Produit qui contient la corde de renforcement selon la revendication 8 comme un élément de renforcement.

10. Produit selon la revendication 9, dans lequel le produit est une courroie à dents.

FIG. 1

FIG. 2

500μm SEI

FIG. 3

FIG. 4A

FIG. 4B

FIG. 5

**EP 2 014 824 B1**

**REFERENCES CITED IN THE DESCRIPTION**

**Patent documents cited in the description**

- JP 2003253568 A
- JP 2003268678 A
- JP 11217739 A
- JP 11013836 A
- JP 2004017378 A
- JP 2004316049 A